# EUROPEAN PATENT APPLICATION

(11) **EP 2 018 032 A1**
(43) Date of publication of application: **21.01.2009**
(21) Application number: 07112886.2
(22) Date of filing: 20.07.2007
(51) Int. Cl.: H04M 1/725, H04L 9/32

(54) **Identification of proximate mobile devices**

(71) Applicant: Nederlandse Organisatie voor Toegepast- Natuurwetenschappelijk Onderzoek TNO, 2628 VK Delft (NL); Koninklijke KPN N.V., 2516 CK The Hague (NL)
(72) Inventor: De Vries, Ferdinand Wouter, 2517 AT Den Haag (NL); van Deventer, Mattijs Oskar, 2264 DL Leidschendam (NL); Klos, Victor Bastiaan, 2498 BV Den Haag (NL)
(74) Representative: van Loon, C.J.J.

(57) **Abstract**

A method of identifying proximate mobile devices comprises the steps of: a first mobile device (1) presenting a first sensory identifier (ID1), a second mobile device (2) detecting the first sensory identifier (ID1), and the second mobile device (2) verifying the detected first sensory identifier (ID1) so as to identify the first device (1). The method may further comprise the steps of: the second mobile device (2) presenting a second sensory identifier (ID2), the first mobile device (1) detecting the second sensory identifier (ID2), and the first mobile device (12) verifying the detected second sensory identifier (ID2) so as to mutually identify the mobile devices. The sensory identifier (ID1) and/or the further sensory identifier (ID2) may comprise a visual identifier, such as a bar code, and/or an audio identifier, such as a sound signal.

## Description

The present invention relates to the identification of proximate mobile devices. More in particular, the present invention relates to a method of identifying proximate mobile devices, and to a mobile device capable of identifying other mobile devices located in its spatial proximity.

Mobile devices, such as mobile (cellular) telephones, PDAs (Personal Digital Assistants) and laptop computers, increasingly have multiple functions. Modem mobile telephones, for example, are not only suitable for making telephone calls but often also include a calculator, a calendar, and even games. Mobile phone games are typically designed for a single player, involving only the mobile device they are played on. However, some types of games require multiple players, each player using his/her own device. Before a multiple player game can begin, the players have to be selected and, accordingly, their mobile devices have to be identified.

It is possible to identify other mobile devices using a stored phone list containing the telephone numbers of other mobile devices and the respective names of their owners. However, the phone list contains no information regarding the availability and proximity of the other mobile devices. If a multiple player game is to be played with a group of players who are located in each other's vicinity, for example within viewing distance, the mobile devices of that group have to be identified in another way. Of course it is possible to manually enter the telephone numbers of participating mobile devices, if these numbers are known. However, this is cumbersome and prone to errors, in particular when the telephone numbers have to be read aloud. Accordingly, there is a need for a simple yet effective identification mechanism for mobile devices located in each other's vicinity.

Such an identification mechanism can also be used in mobile devices other than mobile telephones, for example in PDAs, laptop computers and so-called notebook computers. An identification mechanism may not only be used in gaming applications, as PDAs and similar devices may in general need to identify other devices in order to initiate a transaction between the devices. An example of a transaction is exchanging information, such as data files, calendar appointments, and other information.

The identification mechanism would primarily be used for mobile devices which are located in each other's vicinity, as remote devices would not likely be involved in a multiple player game or data exchange. In particular, it is often desired to invite (the owner of) a mobile device to join a game or to exchange calendar data when (the owner of) the mobile device is in view. For the invited mobile device to join the game or exchange data, it first has to be identified. Accordingly, there is a need to identify proximate mobile devices. Although determining the proximity of (mobile) devices is well known, the Prior Art fails to suggest a solution to the identification problem.

International Patent Application WO 2005/103862 (Motorola), for example, discloses a handheld electronic device which includes a context sensing circuit and a microprocessor. The context sensing circuit is capable of detecting contextual characteristics of the device, such as motion of the device or proximity to or contact with another object. The detected contextual characteristics are used to display a virtual physical representation, for example indicating the angle of the device relative to the horizon. A touch sensor is activated by contact with or close proximity to a foreign object, such as the user, and may be used to determine how the device is held by the user. An infra-red (IR) sensor may be used to sense proximity to other objects, including the user's body. These sensors only provide information regarding the presence of other objects, not regarding their identity.

United States Patent Application US 2002/0021278 (Hinckley et al.) discloses a device in which context values are derived from sensors. A proximity sensor uses infra-red (IR) light to detect the proximity of other objects. The proximity sensor includes an IR transmitter and an IR receiver, the strength of the received (scattered) IR light is assumed to be proportional to the distance to the other object. Again, this known proximity sensor is not used to provide information concerning the identity of proximate objects.

Some Prior Art devices are capable of reading information instead of determining the proximity of other objects. For example, European Patent Application EP 1 677 512 (Sharp) discloses a mobile telephone capable of reading bar codes and taking photographs. This known device is capable of recognising bar codes representing URLs (Uniform Resource Locators, that is, Internet addresses). The bar codes displayed by this known device therefore represent entities outside the mobile telephone and are not used for identifying the mobile device itself.

It is an object of the present invention to overcome these and other problems of the Prior Art and to provide a method of identifying proximate mobile devices which is both simple and efficient, and which is preferably independent of a particular wireless communication technology used by the mobile device.

It is another object of the present invention to provide a mobile device, a server and a mobile communication system for use in such a method.

Accordingly, the present invention provides a method of identifying proximate mobile devices, the method comprising the steps of:
- a first mobile device presenting a sensory identifier,
- a second mobile device detecting the sensory identifier presented by the first mobile device, and
- the second mobile device verifying the detected sensory identifier so as to identify the first device.

By providing a sensory identifier which is presented by the first mobile device and detected and verified by the second mobile device, a reliable identification of the first mobile device can be made. The step of presenting may involve displaying and/or rendering the sensory identifier, while the step of detecting may involve capturing and/or recording the sensory identifier. The step of verifying may involve comparing the detected sensory identifier with a predetermined format to ensure that the detected identifier is a true identifier, and to determine its characteristics. The step of verifying may also, or alternatively, involve pattern recognition techniques which may be known *per se.*

It is noted that the term "sensory identifier" is meant to include audio identifiers, such as sound signals, visual identifiers, such as visible symbols and codes, scent identifiers, such as smells, and touch identifiers, such as Braille patterns. Accordingly, the present invention uses audio and/or visual identifiers to identify proximate mobile devices.

Advantageously, the method of the present invention may further comprise the step of:
- the second mobile device, after verifying the detected sensory identifier, sending an acknowledgement message to the first mobile device.

That is, after the second mobile device has determined that the detected sensory identifier is a valid identifier, it sends a acknowledgement to the first mobile device. In this way, the first mobile device "knows" that its identity has been received by the first mobile device. This acknowledgement is advantageous but not essential.

In a preferred embodiment, the method according to the present invention further comprises the steps of:
- the second mobile device presenting a further sensory identifier,
- the first mobile device detecting the further sensory identifier presented by the second mobile device, and
- the first mobile device verifying the detected further sensory identifier so as to mutually identify the mobile devices.

By providing a further (that is, second) sensory identifier which is presented by the second mobile device and detected and verified by the first mobile device, a reliable identification of the second mobile device can be carried out. The second (further) sensory identifier may be similar to the first sensory identifier, but this is not necessary. For example, the first sensory identifier may be visual while the second sensory identifier is an audio identifier, or vice versa.

The method according to the present invention may further comprise the step of:
- the first mobile device, after verifying the detected further sensory identifier, sending a further acknowledgement message to the second mobile device. By using a further (that is, second) acknowledgement message the first mobile device "knows" that the second mobile device has received its identifier.

The step of verifying a detected sensory identifier (ID1, ID2) may involve a server. Accordingly, the verification step may not be carried out by the mobile device which detected the sensory identifier but by a server to which the detected sensory identifier is forwarded by the mobile device concerned. When the verification is successful, a verification confirmation message may be transmitted from the server to the mobile device from which the detected sensory identifier originated. In such embodiments, the step of verifying is therefore carried out via a server.

As mentioned above, the sensory identifier and/or the further sensory identifier may comprise a visual identifier, such as a bar code or a symbol. Such a visual identifier may be located on a sticker or label affixed to the mobile device to be identified. Alternatively, a visual identifier may be provided by a blinking pattern shown by a display screen, the blinking frequency and/or intervals containing identification information. Accordingly, the visual identifier may be constituted by a spatial and/or temporal pattern, for example produced by a display (such as the display of a mobile device) or a light (such as a light built into a mobile device).

The sensory identifier and/or the further sensory identifier may alternatively, or additionally, comprise an audio identifier, such as a sound signal. The audio identifier may be rendered by a loudspeaker of a mobile device, or may be produced by a percussive element external to the mobile device, such as a drum or a tuning fork. Alternatively, or additionally, the audio identifier may be produced by clapping hands or by tapping the mobile devices together. The sensory identifier may be accompanied by a time stamp. This allows sensory identifiers from multiple sources to be distinguished.

The method of the present invention is not limited to two mobile devices. Accordingly, an advantageous embodiment of the inventive method further comprises the steps of:
- a third mobile device detecting the sensory identifier presented by the first mobile device, and
- the third mobile device verifying the detected sensory identifier so as to identify the first device.

The sensory identifier presented by the first mobile device to the third mobile device may be identical to the sensory identifier presented by the first mobile device to the second mobile device, but this is not necessary and said sensory identifiers may be different.

This embodiment may further comprise the step of:
- the third mobile device, after verifying the detected sensory identifier, sending a still further (that is, third) acknowledgement message to the first mobile device.

Similar to previous embodiments the method may also comprise the steps of:
- the third mobile device presenting a still further (that is, third) sensory identifier,
- the first mobile device detecting the still further sensory identifier, and
- the first mobile device verifying the detected still further sensory identifier so as to mutually identify the mobile devices.

An acknowledgement may be used also in this embodiment if the method further comprises the step of:
- the first mobile device, after verifying the detected still further sensory identifier, sending a yet further (that is, fourth) acknowledgement message to the third mobile device.

In this way, all mobile devices involved can "know" that their identities have been received by the other mobile devices. Advantageously, the method may further comprise the step of each mobile device maintaining a list of mobile devices identified within a predetermined time period.

In a particularly advantageous embodiment, a sensory identifier presented by a mobile device represents a state of the respective mobile device. This allows the mobile devices to respond to the states of other mobile devices. In addition, a mobile device may have a state which is changed in response to a sensory identifier of another mobile device. That is, the state of a mobile device may be changed in response to the state of another device, and/or in response to an identifier of the other device.

The present invention further provides a method of pairing at least two mobile devices, the method comprising the method of identifying proximate mobile devices as defined above.

The present invention additionally provides a computer program product for carrying out the method defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet. The computer program product may be loaded into a mobile device used in the present invention. If a server common to the mobile devices is used, a computer program product for use in the common server may also be provided.

The present invention also provides a mobile device for use in the method defined above, the mobile device comprising:
- a display unit and/or a loudspeaker unit for presenting a sensory identifier associated with the mobile device,
- a camera unit and/or a microphone unit for detecting a sensory identifier presented by another mobile device, and
- a processor unit arranged for verifying the detected sensory identifier so as to identify the other device.

Instead of, or in addition to a camera unit, a scanner unit may be used for scanning symbol codes, such as bar codes.

The mobile device may further be arranged for sending an acknowledgement message to another mobile device upon verification of the detected sensory identifier. Preferably, the mobile device further comprises a memory unit for maintaining a list of mobile devices identified within a predetermined time period.

In addition, the present invention provides a server for use with the method defined above and/or at least one mobile device defined above, which server comprises a processor unit for processing data, a memory unit for storing data and a communication unit for communicating with the at least one mobile device. The processor unit is preferably arranged for verifying sensory identifiers, which identifiers have been received from the at least one mobile device. The processor unit may further be arranged for producing confirmation messages in response to received acknowledgement messages. That is, any acknowledgement messages produced by the mobile devices in response to successful identifications may be forwarded to the server, which in response transmits confirmation messages to the mobile devices. In this way the server maintains a record of successful identifications and is also able to assign different roles to the various mobile devices, for example roles in different games. Accordingly, the processor of the server may be arranged for applying game rules for games involving the at least one mobile device.

In addition, the present invention provides a mobile communication system comprising a mobile device and/or a server as defined above.

The present invention will further be explained below with reference to exemplary embodiments illustrated in the accompanying drawings, in which:
Fig. 1 schematically shows a set of mobile devices according to the present invention.
Fig. 2 schematically shows a mobile device according to the present invention which is provided with a camera.
Fig. 3 schematically shows mobile devices according to the present invention which are provided with loudspeakers and microphones.
Fig. 4 schematically shows a data exchange between mobile devices according to the present invention.
Fig. 5 schematically shows the constituent parts of a mobile device according to the present invention.
Fig. 6 schematically shows the constituent parts of a server according to the present invention.

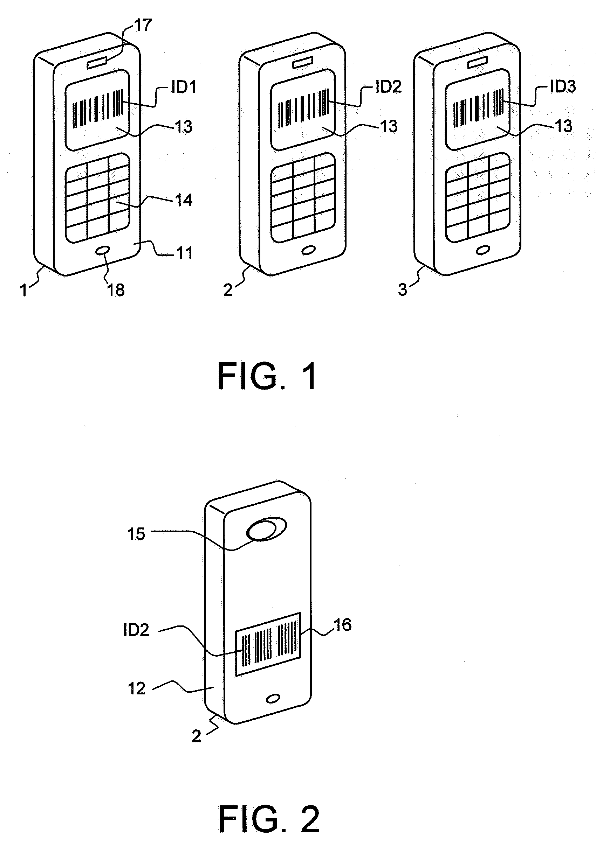

The set of mobile devices shown merely by way of non-limiting example in Fig. 1 comprises a first mobile device 1, a second mobile device 2 and a third mobile device 3. In the example shown, the mobile devices are mobile (cellular) telephone devices which may, however, also incorporate other functions, such as PDA (Personal Digital Assistant) functions.

Each mobile device 1, 2, 3 has a front face 11 on which a display screen 13, a keypad 14, a loudspeaker 17 and a microphone 18 are arranged. It will be understood that the loudspeaker and/or the microphone may alternatively be arranged on a side face of the device.

In accordance with the present invention, the display screen 13 is capable of displaying an identifier. The (first) identifier ID1 presented by the first mobile device 1 is, in the example shown, a bar code. This bar code may be "read" by a bar code scanner or a camera of another mobile device. Fig. 2 shows an example of a mobile device 2 which has a camera 15 mounted in its rear face 12, this camera 15 is capable of detecting the a bar code, symbol code or other visual indication representing the (first) identifier ID1.

In accordance with the present invention, the identifier ID1 represents an or the identity of the mobile device. This identity may be equal to a telephone number, a SIM (Subscriber Identity Module) number, a name, or another type of identity. However, in accordance with a further aspect of the present invention the identifier ID1 may additionally, or alternatively, represent other information, such as the status of the device, or the state of a process or program being executed by the (processor of the) mobile device. This state will be referred to as the state of the mobile device but generally refers to the current stage or step in a process in which the mobile device is involved and which may be controlled and/or executed by the processor of the mobile device.

Instead of a stationary spatial pattern, such as the regular bar code shown in Fig. 1, a temporal pattern may be used, such as a blinking pattern or symbol of which the frequency and/or time intervals contain the identifying information.

In the example of Fig. 1, the visual identifier presented by each mobile device is displayed by its respective display screen 13. In the example of Fig. 2, however, a bar code representing the identifier ID2 of the second mobile device 2 is provided as a bar code which is printed on a label 16, preferably a self-adhesive label. If the mobile device 2 is provided with a camera or bar code scanner at its rear face 12, the label 16 is preferably also provided on the rear face 12. This has the advantage that the cameras of two mobile devices of which the rear faces are turned towards each other will be able to read each other's bar code simultaneously. Accordingly, a quick mutual identification can be achieved.

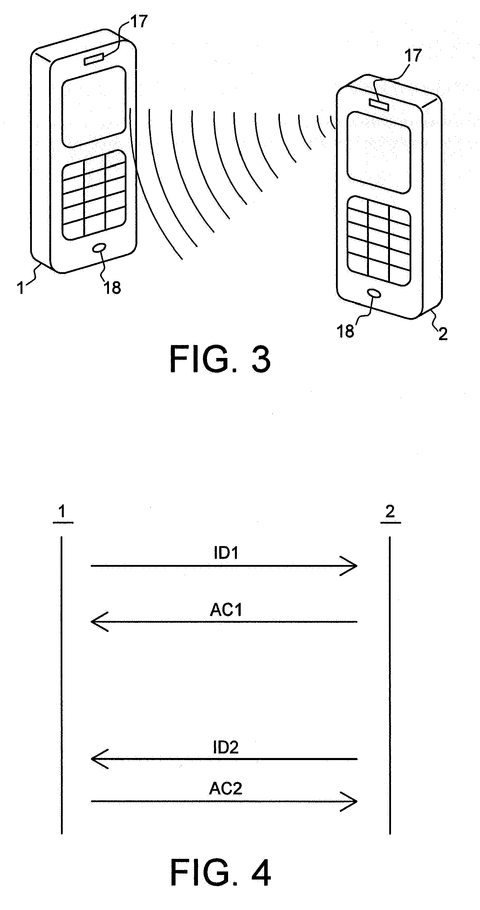

In accordance with the present invention, the identifier may also be an audio identifier. This is illustrated in Fig. 3, where the (second) identifier ID2 is produced by the loudspeaker 17 of the second mobile device 2 and received by the microphone 18 of the first mobile device 1. The identifier ID2 may be constituted by a sound signal, preferably consisting of multiple tones and/or pulses so as to be able to distinguish a plurality of different identifiers.

Alternatively, or additionally, scent identifiers and/or touch identifiers may be used. The mobile devices may, in such embodiments, be capable of producing smells which are detected by another mobile device, or may be capable of sensing the surface of another device, the sensed surface containing touch identifiers, for example Braille symbols. The present invention is therefore not limited to audio or visual identifiers.

The sensory identifiers, in the examples of Figs. 1-3 audio identifiers and visual identifiers, serve to identify the mobile devices when they are located in each other's proximity. The method of identifying serves to determine the identity of the other device, which identity may subsequently be used for exchanging information. More in particular, the method of identifying according to the present invention comprises several steps, including at least the steps of a first mobile device presenting a sensory identifier (such as a bar code or an audio signal), and of a second device detecting the sensory identifier presented by the first mobile device. To complete an actual identification, in most applications of the present invention it will be necessary to verify the detected identifier by comparing the identifier with a predetermined format, range or similar measure. Pattern recognition techniques may be used to match the detected identifier with a stored identifier format and/or to recognize the detected identifier.

Although it is possible to identify a mobile device unilaterally (that is, device 1 identifies device 2 but not vice versa), the present invention also enables a mutual identification (that is, device 1 identifies device 2 and device 2 identifies device 1). In either case, a device may require an acknowledgement when it has successfully been identified by another device. For this purpose, acknowledgement messages may be exchanged. Such messages may be similar to the sensory identifiers presented by the devices and may therefore be visual or audio messages, e.g. displayed symbols and/or rendered audio signals. However, it is not necessary for the acknowledgment messages to be similar to the identifiers. Accordingly, the acknowledgement messages may be transmitted using infra-red (IR) signals or radio frequency (RF) signals.

An exemplary identification procedure is illustrated in Fig. 4, where the exchange of information between two mobile devices 1 and 2 is schematically illustrated. The first mobile device 1 initially presents a first identifier ID1 which is detected by the second mobile device 2. Upon verification of the first identifier ID1, the second device 2 transmits a first acknowledgement message AC1 to the first device 1. The second device 2 also presents a second identifier ID2 which is detected by the first device 1. Upon verification of the second identifier ID2, the first device 1 transmits a second acknowledgement message AC2 to the second device 2. In this way, a confirmed mutual identification of the devices may be achieved. It will be understood that the scheme of Fig. 4 may readily be expanded to include more than two mobile devices.

In preferred embodiments of the present invention each mobile device stores a list of mobile devices it has identified within a certain time period. Every new identifier can then be compared with the list so as to avoid double (mutual) identifications. When a certain identifier is received for the second time, no acknowledgement is sent.

According to a first aspect of the present invention, successful identifications allow mobile devices to enter into transactions with each other. According to a further aspect of the present invention, these identifications typically alter the state of each mobile device, for example from a first state "available for gaming" into a second state "engaged in gaming". The identifiers can also be used to represent a state of the mobile device, for example the current state, in addition to or instead of representing the identity of the mobile device. The (current) state of a mobile device could be used by another mobile device to carry out a step in a process, for example sending data when the identifier of the receiving device indicates the state "ready to receive data". In this way, the identifiers can be used for carrying out a protocol. For some protocols, the actual identities of the devices involved may be irrelevant, as a result of which the identifiers may be used for identifying only the states of the devices, not their identities.

The identification techniques used in the present invention automatically select proximate devices, that is, devices located within a certain, limited range. Both visual and audio identifiers can typically only be detected within a range of a few metres, although audio identifiers may be detected from further away if the amount of background noise is limited. In this document, proximate devices are understood to include devices having a mutual distance ranging from zero or only a few millimetres to several meters or even approximately 100 meters, although larger mutual distances are not excluded and may be used in certain applications.

Sensory identifiers may be accompanied by a time stamp. For example, the moment an audio signal is produced may be registered by the transmitting device, while the moment the audio signal is received is registered by the receiving device. Advantageously, the audio signal contains an indication of the point in time at which it is transmitted, thus allowing the receiving device to quickly determine the time delay and hence the distance between the devices. The point in time at which a signal is produced may be represented by part of the identifier, for example a number of bits of a longer code.

An audio (acoustic) identifier may not only be produced by a loudspeaker, but also by other means. For example, an audio signal could be produced by tapping two mobile devices together, or by tapping one mobile device against another object, such as a table. It is also possible to produce audio identifiers by using a percussive element, for example a drum, pencil, tuning fork or similar element.

The time stamps of the audio signal will allow the receiving devices to determine from which device the sound originated. This can be achieved by broadcasting a receipt message containing the time stamp, which allows the other devices to determine whether they produced the audio identifier at that instant, or by forwarding the receipt message to a central server, if applicable. In addition to a time stamp, most audio identifiers will have characteristics (such as the time and frequency envelopes) which allow them to be distinguished from other audio identifiers and therefore make it possible to trace the identifier to a particular device. If the audio identifier is produced by tapping, it will also be received by the originating device's microphone. The characteristics detected by the receiving device may therefore be compared with the characteristics received by the originating device.

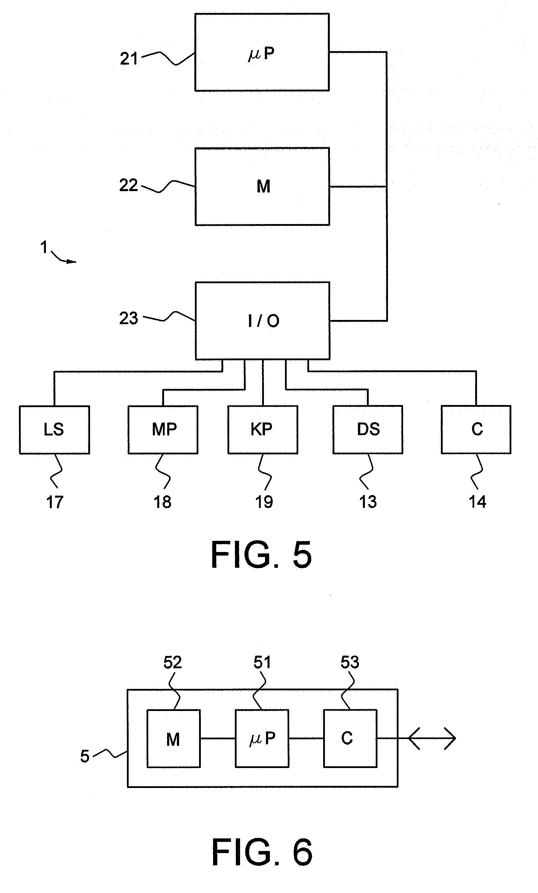

An exemplary embodiment of a mobile device according to the present invention is schematically shown in more detail in Fig. 5. The merely exemplary mobile device 1 illustrated in Fig. 5 comprises a microprocessor (µP) 21, a memory (M) 22, an input/output (I/O) unit 23, a display screen (DS) 13, a camera (C) 14, a loudspeaker (LS) 17, a microphone (MP) 18 and a keypad (KP) 19. The microprocessor 21, the memory 22 and the I/O unit 23 are mutually connected by a common bus, while the display screen 13, the camera 14, the loudspeaker 17, the microphone 18 and the keypad 19 are coupled to the I/O unit 23.

The memory 22 contains suitable software programs for operating the mobile device, in particular for carrying out the identifications described above. In addition, the memory 22 may store a list of recently identified mobile devices. This list may be deleted, for example when a certain amount of time has elapsed or when the mobile device is switched off. The memory 22 may also contain a suitable software program for pattern recognition, for detecting and verifying visual identifiers, such as symbol codes.

The camera 14, which in some embodiments may be replaced with a (bar code) scanner, is capable of capturing an image of a visual identifier presented by another mobile device. Instead of a bar code or other symbol code, another visual identifier can be used, such as a picture of a face, for example the face of the mobile device's owner. The face (or another substantially unique identifier) may be displayed on the screen of the device and/or on a sticker. It will understood that the camera may be omitted when only audio identifiers are used.

The display screen 22 may be the standard display screen present in mobile devices. However, a separate display screen could be provided for displaying an identifier. Such an additional display screen could advantageously be located on the rear face (12 in Fig. 2) of the device, so as to allow simultaneous identification of two devices. Alternatively, or additionally, one or more lights (for example LEDs or small light bulbs) could be provided on the mobile device to produce temporal and/or spatial patterns constituting visual identifiers.

As mentioned above, the present invention makes it possible to (mutually or unilaterally) identify two or more mobile devices. In fact, a whole group of devices may be identified so as to share information (for example pictures, songs, or texts) or to start a common game.

The present invention is particularly suitable for games applications. The identification of mobile devices may allow those devices to participate in games. An example of such a game is Live Stratego, where each mobile device represents a piece of the game. In such applications, the mobile devices should preferably be able to display a symbol representing the particular piece. Accordingly, the mobile devices of the present invention are preferably suitable for playing games.

The mobile devices may be handheld devices such as mobile telephones or, more in general, portable devices such as laptop computers and PDAs. Although the identification process of the present invention has been described with reference to mobile devices which essentially operate as independent units, the present invention can also be utilised in systems, such as communication systems, in which the mobile devices are partially or fully controlled by or at least communicate with a common server. Part of the identification process could therefore be carried out by such a server.

A server for use with the method and/or the mobile device defined above is schematically illustrated in Fig. 6. In the exemplary embodiment of Fig. 6, the server 5 is shown to comprise a processor (µP) unit 51 for processing data, a memory (M) unit 52 for storing data, and an input/output and communication (C) unit 53 for communicating with the at least one mobile device, preferably a plurality of mobile devices. The communication with the mobile devices may use suitable wireless technologies, such as GSM, GPRS or UMTS.

The processor unit 51 of the server 5 may be arranged for verifying sensory identifiers ID1, ID2, .... That is, the mobile device may forward any detected sensory identifiers to the server, for verification by the server. This has the advantage that it is not necessary for the mobile devices to contain suitable software and/or hardware for identification verification. Accordingly, by involving a common server in the verification process, the mobile devices can be kept relatively simple and hence inexpensive.

The processor unit 51 of the server of the present invention may be arranged for producing confirmation messages in response to acknowledgement messages received from the mobile device. These confirmation messages may be specific to a particular role of the mobile device, this role being determined by, for example, a game or other activity the mobile device is about to be involved in. The processor unit of the server may advantageously also be arranged for applying game rules for games involving the at least one mobile device.

The present invention is based upon the insight that visual and/or audio identifiers may advantageously be used to identify proximate mobile devices and/or to present a status of the mobile device.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A method of identifying proximate mobile devices, the method comprising the steps of:
• a first mobile device (1) presenting a sensory identifier (ID1),
• a second mobile device (2) detecting the sensory identifier (ID1) presented by the first mobile device, and
• the second mobile device (2) verifying the detected sensory identifier (ID1) so as to identify the first device (1).

2. The method according to claim 1, further comprising the step of:
• the second mobile device (2), after verifying the detected sensory identifier (ID1), sending an acknowledgement message (AC1) to the first mobile device (1).

3. The method according to claim 1 or 2, further comprising the steps of:
• the second mobile device (2) presenting a further sensory identifier (ID2),
• the first mobile device (1) detecting the further sensory identifier (ID2) presented by the second mobile device, and
• the first mobile device (1) verifying the detected further sensory identifier (ID2) so as to mutually identify the mobile devices.

4. The method according to claim 3, further comprising the step of:
• the first mobile device (1), after verifying the detected further sensory identifier (ID2), sending a further acknowledgement message (AC2) to the second mobile device (2).

5. The method according to any of the preceding claims, wherein the step of verifying a detected sensory identifier (ID1, ID2) involves a server.

6. The method according to any of the preceding claims, wherein the sensory identifier (ID1) and/or the further sensory identifier (ID2) comprises a visual identifier, such as a symbol, a spatial and/or temporal pattern, or a bar code.

7. The method according to claim 6, wherein the visual identifier is presented by a display (13), a label (16) or a light.

8. The method according to any of the preceding claims, wherein the sensory identifier (ID1) and/or the further sensory identifier (ID2) comprises an audio identifier, such as a sound signal.

9. The method according to claim 8, wherein the audio identifier is produced by a loudspeaker (17) or a percussive element.

10. The method according to claim 8 or 9, wherein the audio identifier is produced by clapping hands or by tapping the mobile devices (1, 2) together.

11. The method according to any of the preceding claims, wherein the sensory identifier (ID1; ID2) is accompanied by a time stamp.

12. The method according to any of the preceding claims, further comprising the steps of:
• a third mobile device (3) detecting the sensory identifier (ID1) presented by the first mobile device (1), and
• the third mobile device (3) verifying the detected sensory identifier (ID1) so as to identify the first device (1).

13. The method according to claim 12, further comprising the step of:
• the third mobile device (3), after verifying the detected sensory identifier (ID1), sending a still further acknowledgement message (AC3) to the first mobile device (1).

14. The method according to claim 12 or 13, further comprising the steps of:
• the third mobile device (3) presenting a still further sensory identifier (ID3),
• the first mobile device (1) detecting the still further sensory identifier (ID3), and
• the first mobile device (1) verifying the detected still further sensory identifier (ID3) so as to mutually identify the mobile devices (1, 3).

15. The method according to claim 14, further comprising the step of:
• the first mobile device (1), after verifying the detected still further sensory identifier (ID3), sending a yet further acknowledgement message (AC4) to the third mobile device (3).

16. The method according to any of claims 12-15, further comprising the step of each mobile device (1, 2, 3, ...) maintaining a list of mobile devices identified within a predetermined time period.

17. The method according to any of the preceding claims, wherein a sensory identifier (ID1, ID2, ...) presented by a mobile device (1, 2, ...) represents a state of the respective mobile device.

18. The method according to any of the preceding claims, wherein a mobile device (1, 2, ...) has a state which is changed in response to a sensory identifier (ID2, ID1, ...) of another mobile device (2, 1, ...).

19. A method of pairing at least two mobile devices (1, 2, ...), the method comprising the method of identifying proximate mobile devices according to any of the preceding claims.

20. A computer program product for carrying out the method according to any of the preceding claims.

21. A mobile device (1) for use in the method according to any of claims 1-19, comprising:
• a display unit (13) and/or a loudspeaker unit (17) for presenting a sensory identifier (ID1) associated with the mobile device,
• a camera unit (14) and/or a microphone unit (18) for detecting a sensory identifier (ID2; ID3) presented by another mobile device, and
• a processor unit (21) arranged for verifying the detected sensory identifier (ID2; ID3) so as to identify the other device (2; 3).

22. The mobile device according to claim 21, wherein the processor unit (21) is further arranged for sending an acknowledgement message (AC2) to another mobile device upon verification of the detected sensory identifier (ID2; ID3).

23. The mobile device according to claim 21 or 22, further comprising a memory unit (22) for maintaining a list of mobile devices identified within a predetermined time period.

24. The mobile device according to claim 21, 22 or 23, wherein the processor unit (21) arranged for verifying the detected sensory identifier (ID2; ID3) by forwarding the detected sensory identifier to a verifying server (5).

25. The mobile device according to any of claims 21-24, wherein the processor unit (21) is arranged to change a state of the mobile device in response to a sensory identifier (ID2, ID1, ...) of another mobile device (2, 1, ...).

26. A server (5) for use in the method according to any of claims 1-19 and/or with the mobile device (1; 2) according to any of claims 21-25, which server comprises a processor unit (51) for processing data, a memory unit (52) for storing data and a communication unit (53) for communicating with the at least one mobile device (1; 2).

27. The server according to claim 26, wherein the processor unit (51) is arranged for verifying sensory identifiers (ID1, ID2, ...).

28. The server according to claim 26 or 27, wherein the processor unit (51) is arranged for producing confirmation messages in response to received acknowledgement messages (AC1, AC2, ...).

29. The server according to claim 26 or 27, wherein the processor unit (51) is arranged for applying game rules for games involving the at least one mobile device (1; 2).

30. A mobile communication system, comprising at least one mobile device (1) according to any of claims 21-25 and/or a server (5) according to any of claims 26-29.
